# EUROPÄISCHE PATENTANMELDUNG

(11) **EP 3 315 990 A1**
(43) Veröffentlichungstag der Anmeldung: **02.05.2018**
(21) Anmeldenummer: 16195641.2
(22) Anmeldetag: 26.10.2016
(51) Int. Cl.: G01S 5/02, B25B 23/147

(54) **VERFAHREN ZUM LOKALISIEREN VON WERKZEUGEN**

(71) Anmelder: HILTI Aktiengesellschaft, 9494 Schaan (LI)
(72) Erfinder: Schmidt, Peer, 88131 Lindau (DE); Kaluscha, Ewald, 6800 Feldkirch (AT)
(74) Vertreter: Hilti Aktiengesellschaft Corporate Intellectual Property

(57) **Zusammenfassung**

Ein Verfahren zum Lokalisieren von Werkzeugen und Batteriepacks für Werkzeuge nutzt folgende Schritte: Ein kurzreichweitiges Funksignal (15) wird regelmäßig durch einen Ortungssender (12) in dem Werkzeug (1) ausgesendet. Das Funksignal enthält eine physikalische Adresse des Werkzeugs. Ein Empfänger einer transportablen Relaiseinrichtung (2) empfängt das kurzreichweitige Funksignal. Die mobile Relaiseinrichtung übermittelt die physikalische Adresse an eine zentrale Meldestelle (4) mittels einer zwischen der Relaiseinrichtung und der zentrale Meldestelle etablierten Mobilfunkverbindung oder Internetverbindung. Die zentrale Meldestelle vergleicht die übermittelte physikalische Adresse mit in einem Register (21) der zentrale Meldestelle hinterlegten, physikalischen Adressen zu lokalisierender Werkzeuge, um zu ermitteln, ob das der übermittelten physikalischen Adresse zugeordnete Werkzeug zu lokalisieren ist. Ausgeben einer Benachrichtigung, wenn das der übermittelten physikalischen Adresse zugeordnete Werkzeug zu lokalisieren ist.

## Beschreibung

### GEBIET DER ERFINDUNG

Die vorliegende Erfindung betrifft ein Verfahren zum Lokalisieren von Werkzeugen, insbesondere handgehaltenen Werkzeugmaschinen.

Handwerker und Bauunternehmer bringen in der Regel ihre eigenen Werkzeuge auf Baustellen mit. Die Werkzeuge werden untertags verteilt über die gesamte Baustelle genutzt. Die Handwerker nutzen typischerweise mehrere Werkzeuge im Wechsel, wodurch die Werkzeuge zeitweise ungenutzt herumliegen. Manche der Werkzeuge werden in Folge verlegt, vergessen, verwechselt oder mutwillig entwendet. Nicht jeder Verlust wird sofort auffallen, wodurch das Auffinden, insbesondere bei mehreren Baustellen, erschwert wird.

### OFFENBARUNG DER ERFINDUNG

Das erfindungsgemäße Verfahren zum Lokalisieren von Werkzeugen ermöglicht diese auch nach längerer Zeit aufzufinden. Ein kurzreichweitiges Funksignal wird regelmäßig durch einen Ortungssender in dem Werkzeug ausgesendet. Das Funksignal enthält eine physikalische Adresse des Werkzeugs. Ein Empfänger einer transportablen Relaiseinrichtung empfängt das kurzreichweitige Funksignal. Die mobile Relaiseinrichtung übermittelt die physikalische Adresse an eine zentrale Meldestelle mittels einer zwischen der Relaiseinrichtung und der zentrale Meldestelle etablierten Mobilfunkverbindung oder Internetverbindung. Die zentrale Meldestelle vergleicht die übermittelten physikalischen Adresse mit in einem Register der zentralen Meldestelle hinterlegten, physikalischen Adressen zu lokalisierendes Werkzeug, um zu ermitteln, ob das der übermittelten physikalischen Adresse zugeordnete Werkzeug zu lokalisieren ist. Ausgeben einer Benachrichtigung, wenn das der übermittelten physikalischen Adresse zugeordnete Werkzeug zu lokalisieren ist.

Der Eigner kann seine verlorenen Werkzeuge bei der zentralen Meldestelle hinterlegen. Der Eigner oder jemand anderes kann mit der transportablen Relaiseinrichtung, z.B. einem Smartphone, die in Frage kommenden Baustellen ablaufen. Die Reichweite des Ortungssenders liegt im Bereich von typischen Abmessungen einer mittleren Baustelle, z.B. etwa 100 Meter. Das Smartphone empfängt die physikalischen Adressen von allen Werkzeugen auf der Baustelle. Die zentrale Meldestelle gleicht die empfangenen physikalischen Adressen ab und informiert die Eigner über auf der Baustelle befindliche verlorene Werkzeuge.

Das Verfahren ist sehr effizient, sowohl in Hinblick auf die notwendige Infrastruktur als auch energietechnisch. Der Ortungssender kann sehr klein und mit einer eigenen Stromversorgung in der Systemelektronik integriert werden. Dies ist insbesondere vorteilhaft, wenn eine Manipulation durch einen Dieb unterbunden werden soll. Der geringe Energieverbrauch erlaubt eine Ortung für eine lange Zeit, vorzugsweise über mehrere Monate.

Eine Ausgestaltung sieht vor, dass die Relaiseinrichtung ihren geographischen Standort bestimmt, den geographischen Standort an die zentrale Meldestelle übermittelt, und die Benachrichtigung den geographischen Standort enthält. Ein Smartphone oder ähnliche Mobilgeräte sind bereits mit einem GPS-Empfänger oder einer ähnlichen Technik zur Triangulation ihrer Position versehen. Der geographische Standort kann unaufgefordert an die zentrale Meldestelle übermittelt werden oder wenn erst nachdem die zentrale Meldestelle ein Werkzeug als zu lokalisierend erkannt hat.

Die zentrale Meldestelle kann die Benachrichtigung an die mobile Relaiseinrichtung zur Anzeige durch die mobile Relaiseinrichtung übermitteln. Eine weitere Ausgestaltung sieht vor, dass das Register zugeordnet zu jeder hinterlegten physikalischen Adresse eine Kontaktadresse aufweist und die zentrale Meldestelle über eine Mobilfunkverbindung oder Internetverbindung eine Benachrichtigung an die Kontaktadresse übermittelt, wenn die der übermittelten physikalischen Adresse zugeordnete Werkzeug zu lokalisieren ist. Die zentrale Meldestelle kann den Inhaber der Relaiseinrichtung, aber auch andere Personen über ein zu lokalisierendes Werkzeug informieren.

Eine Ausgestaltung sieht vor, dass die zentrale Meldestelle einen Sperrcode an die mobile Relaiseinrichtung übermittelt. Die Relaiseinrichtung etabliert eine Kommunikationsverbindung mit dem Werkzeug, um den Sperrcode an das Werkzeug zu übermitteln, und das Werkzeug beschränkt seine Funktion ansprechend auf den übermittelten Sperrcode. Eine Kommunikation zwischen dem Werkzeug und der Relaiseinrichtung wird vorzugsweise nur etabliert, wenn ein solcher Sperrcode übermittelt wird. Ob ein Sperrcode zu übermitteln ist, kann beispielsweise für jedes Werkzeug individuell in dem Register hinterlegt sein.

Das kurzreichweitige Funksignal wird vorzugsweise in einem ISM-Band mit einer Mittenfrequenz von 2,45 GHz oder 5,8 GHz ausgesendet. Das Funksignal kann mit einer Periodizität von 1/20 pro Sekunde bis 1 pro Sekunde wiederholt werden.

Ein Werkzeug zur Verwendung für das Verfahren zum Lokalisieren hat einen Haupttaster zum Aktivieren des Werkzeugs, einen Ortungssender, welcher unabhängig von dem Haupttaster regelmäßig ein eine physikalische Adresse beinhaltendes, kurzreichweitiges Funksignal aussendet, und eine unterbrechungsfreie Stromversorgung für den Ortungssender.

### KURZE BESCHREIBUNG DER FIGUREN

Die nachfolgende Beschreibung erläutert die Erfindung anhand von exemplarischen Ausführungsformen und Figuren. In den Figuren zeigen:

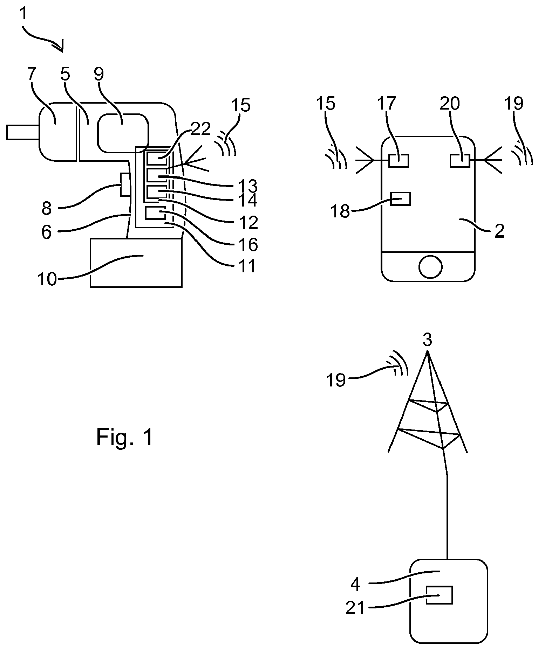

Fig. 1 eine Anordnung zum Lokalisieren einer Werkzeug

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Ein beispielhaftes Verfahren zum Lokalisieren eines Werkzeugs wird anhand der illustrierten Konfiguration von Fig. 1 beschrieben. Die Konfiguration basiert auf einem Elektroschrauber **1,** welcher zu lokalisieren ist, einem Smartphone **2** als Relais, einer Mobilfunkstrecke **3** und einer zentrale Meldestelle **4.**

Der beispielhafte handgehaltene Elektroschrauber **1** hat ein Maschinengehäuse **5,** an welchem ein Handgriff **6** und ein Werkzeughalter **7** befestigt sind. Der Anwender hält den Elektroschrauber **1** an dem Handgriff **6** und betätigt dabei einen Haupttaster **8,** um den Elektroschrauber **1** in Betrieb zu nehmen. Im Betrieb dreht ein Elektromotor **9** den Werkzeughalter **7** um eine Arbeitsachse. Ein Batteriepaket **10** kann den Elektromotor **9** mit Strom versorgen. Der Elektroschrauber **1** stellt vorzugsweise den Betrieb ein, wenn der Anwender den Haupttaster **8** loslässt. Mit dem Loslassen des Haupttasters **8** kann die Energieversorgung des Elektroschraubers **1** unterbrochen werden. Eine Steuerung oder Regelung des Elektroschraubers **1** erfolgt durch eine Gerätesteuerung **11.** Die Gerätesteuerung **11** kann unter Anderem eine Drehzahl des Elektromotors **9** regeln, beispielsweise in Abhängigkeit der Betätigung des Haupttasters **8.** Die Gerätesteuerung **11** beinhaltet beispielsweise ein oder mehrere integrierte Schaltkreise, z.B. einen Mikroprozessor, welche auf einer Leiterplatte angeordnet sein. Eine Manipulation der Gerätesteuerung **11** führt in der Regel zu einer irreparablen Beschädigung des Elektroschraubers **1.**

Der dargestellte Elektroschrauber **1** ist nur beispielhaft für andere Werkzeuge. Insbesondere kann das Werkzeug netzgebunden mit Strom versorgt werden. Andere Werkzeuge haben einen Benzinmotor, einen Druckluftantrieb, eine Verbrennungskammer für Gas oder Pulver. Ferner kann das Werkzeug ein Bohrhammer, ein Elektromeißel, eine Kreissäge, eine Stichsäge, ein Winkelschleifer, ein Kernbohrgerät, ein Setzgerät, ein Elektronagler etc. sein. Weitere Werkzeuge dienen der Vermessung. Ferner kann das Batteriepack an oder separat von dem Werkzeug lokalisiert werden.

Der Elektroschrauber **1** hat einen autarken Ortungssender **12.** Der Ortungssender **12** ist kompakt aufgebaut und vorzugsweise in der Gerätesteuerung **11** integriert. Der Ortungssender **12** beinhaltet einen Radioemitter **13** und eine eigene Stromversorgung **14.**

Der Radioemitter **13** sendet eine physikalische Adresse des Ortungsgeräts **12** kodiert in einem Funksignal **15** aus. Die physikalische Adresse kann beispielsweise dem Bluetooth Low Energy Protokoll entsprechend in dem Funksignal **15** kodiert sein. Die physikalische Adresse ist beispielsweise eine Zeichenfolge aus zwölf alphanumerischen Zeichen. Die physikalische Adresse ist eindeutig für diesen Ortungssender **12.** Jeder andere Ortungssender **12** hat vorzugsweise eine von der Zeichenfolge verschiedene physikalische Adresse. Das Funksignal **15** wird vorzugsweise in einem ISM-Band gesendet, z.B. bei 2,45 GHz oder 5,8 GHz.

Das Funksignal **15** ist kurzreichweitig gemäß den ECC Regularien. Der Radioemitter **13** hat eine Sendeleistung, welche zum Empfangen des Funksignals **15** durch einen Empfänger in einem Umkreis von etwa 100 Meter ausreichend ist. Die Sendeleistung ist jedoch soweit beschränkt, dass in einem deutlich größeren Abstand, z.B. von 500 Metern, das Funksignal **15** nicht mehr erfassbar ist. Die beschränkte Sendeleistung ermöglicht den Ortungssender **12** über lange Zeit durch die eigene Stromversorgung **14** zu betreiben.

Der Radioemitter **13** kann beispielsweise für weitere Funktionen des Werkzeugs 1 verwendet werden. Beispielsweise wird der Radioemitter **13** im Betrieb genutzt, um Nutzungsprotokolle an ein Aufzeichnungsgerät, z.B. ein Smartphone **2,** zu übermitteln.

Der Ortungssender **12** wiederholt das Aussenden der physikalischen Adresse in regelmäßigen Intervallen, beispielsweise mit einer Periodizität von 1/20 und 1/2 Sekunden. Zwischen den gesendeten Funksignalen **15** kann der Ortungssender **12** in einen Ruhemodus wechseln, um Energie zu sparen. Der Ortungssender **12** agiert unabhängig von dem Betriebszustand des Werkzeugs. Das Funksignal **15** wird sowohl ausgesendet, wenn der Haupttaster **8** betätigt wie auch wenn der Haupttaster **8** nicht betätigt ist.

Die Stromversorgung **14** beinhaltet vorzugsweise eine Knopfbatterie. In einer anderen Ausführung enthält die Stromversorgung **14** einen ladbaren Energiespeicher, welcher während des Betriebs des Elektroschraubers **1** geladen wird. Die Stromversorgung **14** wird von keiner anderen Komponente des Elektroschraubers **1** genutzt, d.h. entladen. Eine Manipulationssicherung **16** kann während des Betriebs oder beim Einschalten des Elektroschraubers **1** prüfen, ob die Stromversorgung **14** beschädigt ist. Gleichermaßen kann geprüft werden, ob der Ortungssender **12** funktionsfähig ist. Falls ein Fehler erkannt wird, unterbindet die Manipulationssicherung **16** das Einschalten bzw. den Betrieb des Werkzeugs **1.**

Der Ortungssender **12** kann zusätzlich zu der physikalischen Adresse weitere Daten aussenden. Beispielsweise enthalten die Daten eine Typenkennung des Werkzeugs. Die Typenkennung kann einfach angeben, dass das Signal von einem Ortungssender **12** eines Werkzeugs ausgeht, oder beispielsweise den Typ des Werkzeugs angeben. Die physikalischen Adressen werden vorzugsweise in Blöcken und in aufsteigender Reihenfolge nacheinander vergeben. Aus der Adresse ist nicht unmittelbar erkennbar, ob das Funksignal **15** von einem Ortungssender **12** oder beispielsweise einem Mobiltelefon mit eingeschaltetem Bluetooth-Transmitter ausgeht.

Das Smartphone **2** hat einen aktivierten Bluetooth-Empfänger **17,** welcher die Funksignale **15** empfängt. Eine auf dem Smartphone **2** ausgeführte Applikation prüft in regelmäßigen Intervallen die Funkkanäle in den von den Ortungssendern **12** genutzten ISM-Bändern. Das Smartphone **2** dekodiert die physikalische Adresse in dem Funksignal **15.**

Das Smartphone **2** ermittelt seinen geographischen Standort. Der geographische Standort kann beispielsweise durch eine GPS-Empfänger **18** des Smartphones **2** bestimmt werden. Alternativ können Daten übermittelt werden, welche mittelbar einen Rückschluss auf den geographischen Standort zulassen. Beispielsweise kann das Smartphone **2** die Standorte oder Kennungen der nächsten Mobilfunkzellen übermitteln.

Das Smartphone **2** kontaktiert die zentrale Meldestelle **4.** Eine Kommunikation des Smartphones **2** mit der zentralen Meldestelle **4** erfolgt über eine Telekommunikationsverbindung **19** oder über eine Internetverbindung oder über eine Kombination der beiden. Das Smartphone **2** hat beispielsweise einen zugehörigen GSM-Transmitter **20** zum Senden und Empfangen an eine bzw. von einer Funkzelle **3** eines Mobilfunkanbieters. Das Smartphone **2** oder die Relaiseinrichtung **2** kann alternative Transmitter für die Telekommunikationsverbindung oder Internetverbindung aufweisen. Das Smartphone **2** übermittelt an die physikalische Adresse an die zentrale Meldestelle **4.** Das Smartphone **2** kann zugleich seinen geographischen Standort an die zentrale Meldestelle **4** übermitteln. Vor der Kontaktaufnahme und Übermittlung der physikalischen Adresse kann das Smartphone **2** prüfen, ob das Funksignal **15** eine dem Ortungssender **12** entsprechende Typenkennung beinhaltet. Falls die Typenkennung enthalten ist, wird die physikalische Adresse übertragen, andernfalls wird das Funksignal **15** ignoriert und nicht weiter verarbeitet.

Die zentrale Meldestelle **4** hat ein Register **21,** in welchem physikalische Adressen von Ortungssendern **12** zu lokalisierendes Werkzeug abgelegt sind. Ein Eigner kann sein Werkzeug in dem Register **21** eintragen lassen. Es können bereits alle Werkzeuge in dem Register **21** eingetragen sein; der Eigner gibt zu seiner Werkzeug an, dass diese nun zu lokalisieren ist.

Die zentrale Meldestelle **4** vergleicht die von dem Smartphone **2** übermittelte physikalische Adresse mit den in dem Register **21** hinterlegten physikalischen Adressen. Bei einer Übereinstimmung löst die zentrale Meldestelle **4** eine oder mehrere vorgegeben Aktionen aus. Die Aktionen können fest vorgegeben sein. Vorzugsweise kann der Eigner in dem Register **21** festlegen, welche Aktionen nach einem Lokalisieren seiner Werkzeuge auszuführen sind.

Bei einer beispielhaften Aktion wird der in der zentrale Meldestelle **4** zu der physikalischen Adresse hinterlegte Eigner des Werkzeugs benachrichtigt. Beispielsweise übermittelt die zentrale Meldestelle **4** an den Eigner eine elektronische Kurzbotschaft oder eine EMail, in welcher auf den Fund des Werkzeugs hingewiesen und der geographische Standort des Werkzeugs angegeben ist. In dem Register kann eine Telefonnummer, eine EMail-Adresse etc. des Eigners hinterlegt sein.

Bei einer beispielhaften Aktion übermittelt die zentrale Meldestelle **4** einen Warnhinweis an das Smartphone **2.** Das Smartphone **2** zeigt daraufhin auf dem Display an, dass sich in der Nähe ein zu lokalisierendes Werkzeug befindet. Der Warnhinweis kann den Typ des Werkzeugs, eine Darstellung des Werkzeugs, etc. enthalten, welche dem Inhaber des Smartphones **2** das Erkennen des zu lokalisierenden Werkzeugs vereinfachen. In einer Ausgestaltung kann das Smartphone **2** die Signalstärke des Funksignals **15** bestimmen. Sobald sich der Inhaber das Smartphone **2** bewegt, ändert sich die Signalstärke. Aus der Änderung kann bestimmt werden, ob sich der Anwender auf das Werkzeug zubewegt oder von ihr entfernt. Eine entsprechende Richtungsangabe auf dem Display des Smartphones **2** kann dem Inhaber zu dem Werkzeug führen.

Bei einer beispielhaften Aktion übermittelt die zentrale Meldestelle **4** einen Sperrcode an das Smartphone **2.** Das Smartphone **2** nimmt mit Ortungssender **12** eine Kommunikation auf und übermittelt den Sperrcode an den Ortungssender **12.** Der Ortungssender **12** hat eine Speicherzelle **22,** in welcher der Sperrcode abgelegt wird oder in welcher der Empfang des Sperrcode festgehalten wird. Der Ortungssender **12** ist vorzugsweise unlösbar mit der Gerätesteuerung **11** verbunden. Die Gerätesteuerung **11** prüft beispielsweise vor oder während des Betriebs, ob der Ortungssender **12** funktionsfähig ist und verweigert ansonsten den Betrieb des Werkzeugs. Die Gerätesteuerung **11** prüft vor oder während des Betriebs, ob der Sperrcode empfangen wurde, und deaktiviert dann den Betrieb. Alternativ kann bei empfangenem Sperrcode die Leistung des Werkzeugs reduziert werden, das Gerät nach kurzer Dauer deaktiviert werden, oder in anderer Weise die Funktionsfähigkeit des Werkzeugs reduziert werden.

Der Aufbau einer Kommunikation zwischen dem Werkzeug **1** und der Relaiseinrichtung **2** benötigt viel Energie, welche rasch die Stromversorgung **14** leeren kann. Der Ortungssender **12** ist daher bei ausgeschaltetem Werkzeug **1** nicht empfangsbereit bis auf in seltenen und kurzen Zeitfenstern. Die Zeitfenster haben eine beispielsweise wenigstens 10-fach geringere Periodizität wie das Funksignal **15.** Vorzugsweise ergibt sich ein Zeitfenster wenigstens einmal pro Minute. Der Ortungssender **12** kann in dem Funksignal **15** den Zeitpunkt des nächsten Zeitfensters übermitteln. Die Relaiseinrichtung **2** synchronisiert sich auf den Zeitpunkt und sendet zu dem Zeitpunkt eine Anfrage für einen Kommunikationsaufbau an den Ortungssender **12.** Der Ortungssender **12** und die Relaiseinrichtung **2** etablieren daraufhin eine Kommunikationsverbindung, z.B. gemäß eines Bluetooth-Protokolls. Während der Kommunikationsverbindung kann der Sperrcode an das Werkzeug **1** übermittelt werden.

## Patentansprüche

1. Verfahren zum Lokalisieren von Werkzeugen und Batteriepacks für die Werkzeuge **gekennzeichnet durch** die Schritte:
regelmäßiges Aussenden eines kurzreichweitigen Funksignals (15) **durch** einen Ortungssender (12) in dem Werkzeug (1) oder dem Batteriepack, wobei das Funksignal (15) eine physikalische Adresse des Werkzeugs (1) oder des Batteriepacks (10) enthält, Empfangen des kurzreichweitigen Funksignals (15) **durch** einen Empfänger einer transportablen Relaiseinrichtung (2);
Übermitteln der physikalischen Adresse an eine zentrale Meldestelle (4) **durch** die transportable Relaiseinrichtung (2) mittels einer zwischen der Relaiseinrichtung (2) und
der zentrale Meldestelle (4) etablierten Mobilfunkverbindung oder Internetverbindung, Ermitteln, ob das der übermittelten physikalischen Adresse zugeordnete Werkzeug (1) oder Batteriepack (10) zu lokalisieren ist, **durch** Vergleichen der übermittelten physikalischen Adresse mit in einem Register (21) der zentrale Meldestelle (4) hinterlegten physikalischen Adressen zu lokalisierender Werkzeuge (1) und
Batteriepacks (10),
Ausgeben einer Benachrichtigung, wenn die der übermittelten physikalischen Adresse zugeordnete Werkzeug (1) zu lokalisieren ist.

2. Verfahren nach Anspruch 1, **dadurch gekennzeichnet, dass** die Relaiseinrichtung (2) ihren geographischen Standort bestimmt, den geographischen Standort an die zentrale Meldestelle (4) übermittelt, und die Benachrichtigung den geographischen Standort enthält.

3. Verfahren nach Anspruch 1 oder 2, **dadurch gekennzeichnet, dass** das Register (21) zugeordnet zu jeder hinterlegten physikalischen Adresse eine Kontaktadresse aufweist und die zentrale Meldestelle (4) über eine Mobilfunkverbindung oder Internetverbindung eine Benachrichtigung an die Kontaktadresse übermittelt, wenn die der übermittelten physikalischen Adresse zugeordnete Werkzeug (1) zu lokalisieren ist.

4. Verfahren nach einem der vorhergehenden Ansprüche, **dadurch gekennzeichnet, dass** die zentrale Meldestelle (4) die Benachrichtigung an die mobile Relaiseinrichtung (2) zur Anzeige durch die mobile Relaiseinrichtung (2) übermittelt.

5. Verfahren nach einem der vorhergehenden Ansprüche, **dadurch gekennzeichnet, dass** die zentrale Meldestelle (4) einen Sperrcode an die mobile Relaiseinrichtung (2) übermittelt, die Relaiseinrichtung (2) eine Kommunikationsverbindung mit des Werkzeugs (1) etabliert, um den Sperrcode an das Werkzeug (1) zu übermitteln, und das Werkzeug (1) die Funktion des Werkzeugs (1) ansprechend auf den übermittelten Sperrcode beschränkt.

6. Verfahren nach einem der vorhergehenden Ansprüche, **dadurch gekennzeichnet, dass** das Funksignal (15) in einem ISM-Band mit einer Mittenfrequenz von 2,45 GHz oder 5,8 GHz ausgesendet wird.

7. Verfahren nach einem der vorhergehenden Ansprüche, **dadurch gekennzeichnet, dass** das Funksignal (15) mit einer Periodizität von 1/20 pro Sekunde bis 1 pro Sekunde wiederholt wird.

8. Verfahren nach einem der vorhergehenden Ansprüche, **dadurch gekennzeichnet, dass** eine Gerätsteuerung (11) des Werkzeugs (1) eine Funktionsfähigkeit des Ortungssenders (12) und einer Stromversorgung (14) des Ortungssenders (12) prüft und bei einem Fehler das Werkzeug (1) deaktiviert.

9. Werkzeug (1) zur Verwendung für eines der Verfahren nach den Ansprüchen 1 bis 7, mit einem Haupttaster (8) zum Aktivieren des Werkzeugs (1),
einem Ortungssender (12), welcher unabhängig von dem Haupttaster (8) regelmäßig ein eine physikalische Adresse beinhaltendes, kurzreichweitiges Funksignal (15) aussendet, und
einer unterbrechungsfreien Stromversorgung (14) für den Ortungssender (12).

10. Werkzeug nach Anspruch 9, **gekennzeichnet durch** eine Systemelektronik zum Steuern der Aktivität des Werkzeugs (1) und wobei der Ortungssender (12) in der Gerätesteuerung (11) integriert ist.

11. Werkzeug nach Anspruch 10, **dadurch gekennzeichnet dass**, die Gerätesteuerung (11) eine Manipulationssicherung (16) beinhaltet, welche bei einer Fehlfunktion des Ortungssenders (12) oder der unterbrechungsfreien Stromversorgung (14) das Werkzeug (1) deaktviert.
